# EUROPÄISCHE PATENTSCHRIFT

(11) **EP 1 592 913 B1**
(45) Veröffentlichungstag und Bekanntmachung des Hinweises auf die Patenterteilung: **10.01.2007**
(21) Anmeldenummer: 03730145.4
(22) Anmeldetag: 31.05.2003
(51) Int. Cl.: F16M 7/00

(54) **NIVELLIERSYSTEM FÜR HAUSHALTSMASCHINEN**
LEVELLING SYSTEM FOR DOMESTIC APPLIANCES
SYSTEME DE MISE A NIVEAU POUR APPAREILS ELECTROMENAGERS

(30) Priorität: 14.02.2003 DE 20302388 U
(43) Veröffentlichungstag der Anmeldung: 09.11.2005
(73) Patentinhaber: Az Ausrüstung und Zubehör GmbH & Co. Kg, 45525 Hattingen (DE)
(72) Erfinder: LOTZ, Joachim, 58285 Gevelsberg (DE)
(74) Vertreter: Stratmann, Ernst
(86) Internationale Anmeldenummer: PCT/EP2003/005732
(87) Internationale Veröffentlichungsnummer: WO 2004/072540

(56) Entgegenhaltungen:
- EP-A- 0 544 175
- DE-A- 2 327 053
- DE-A- 3 519 479
- DE-A- 19 528 901
- DE-A- 19 606 460
- DE-U- 29 512 617
- US-A- 3 954 241
- US-A- 3 991 962
- US-A- 4 770 275
- US-A- 6 009 815

## Beschreibung

### Hintergrund der Erfindung

Die Erfindung betrifft ein Nivelliersystem für eine Haushaltsmaschinen, wie Waschmaschine, bestehend aus an der Unterseite der Haushaltsmaschine angeordneten Gerätefüßen, die zumindest teilweise mittels eines Betätigungsgliedes höhenverstellbar sind und dadurch eine Höheneinstellung der Haushaltsmaschine und/oder eine Anpassung an Bodenunebenheiten erlauben, wobei das Betätigungsglied ein Zugglied ist und die mittels des Zuggliedes höhenverstellbaren Gerätefüße jeweils ein an der Unterseite der Haushaltsmaschine befestigtes Zylindergehäuse aufweisen, in welchem ein den Gerätefußteller tragender Kolben angeordnet ist, wobei das Zugglied die Kolben der mittels des Zuggliedes höhenverstellbaren Gerätefüße miteinander verbindet.

### Kurze Beschreibung des Standes der Technik

Aus der DE 35 19 479 A1 ist bereits ein Nivelliersystem für ein- oder unterbaufähige Haushaltsgeräte bekannt, bei dem die Höheneinstellung zumindest der hinteren Gerätefüße von der Frontseite des Gerätes über eine Betätigungseinrichtung vorgenommen werden kann. Dazu ist ein für den Benutzer zugängliches Betätigungselement vorgesehen, welches über ein geschlossenes Flüssigkeitssystem mit den hinteren Gerätefüßen in Verbindung steht. Mit der bekannten Einrichtung soll erreicht werden, daß bei Haushaltsgeräten, die nach dem Ein- oder Unterbau in Küchenzeilen an ihrem hinteren Ende nicht mehr zugängliche Gerätefüße aufweisen, gleichwohl in der Einbauhöhe entsprechend angepaßt werden können.

Nachteilig ist, daß es verhältnismäßig schwierig ist, die Anordnung flüssigkeitsdicht zu halten.
Es sind auch mit mechanischen Getrieben arbeitende Einrichtungen bereits bekannt, wie beispielsweise in der DE 196 06 460 A1 dargestellt. Derartige mit mechanischen Getrieben versehene Gerätefüße sind jedoch verhältnismäßig aufwendig und teuer und lassen sich manchmal auch schlecht bedienen.

Gemäß der EP 0 544 175 A1 wird das Problem des Ausgleichs von Höhendifferenzen aufgrund von Bodenunebenheiten bei nicht zugänglichen Maschinenfüßen dadurch gelöst, daß zwischen einem Oberteil des Fußes und einem bodenseitigen Unterteil ein Federelement angeordnet wird. Allerdings wird in der Druckschrift eingeräumt, daß die richtige Auswahl des Federelementes notwendig ist, die abhängig ist vom Maschinengewicht. Wenn dann zu den statischen Belastungen noch dynamische Belastungen hinzukommen, schlägt die Druckschrift vor, ein elastisch verformbares Element zur Feder parallel zu schalten. Ein derartiger einzeln gefederter und mit einer mechanischen Dämpfung versehener Fuß ist allerdings maschinengewichtsabhängig und somit nicht säulenfähig, kann also nicht bei der vertikalen Kombination von Waschmaschine und Wäschetrockner angewendet werden.

Das gilt auch für eine dem Anmelder bekannte selbstjustierende verstellbare Fußeinrichtung, bestehend aus einem Feder-Dämpfungselement und einem herkömmlichen Maschinenfuß. Die in einem zylindrischen Gehäuse untergebrachte vorgespannte Feder wirkt auf das Dämpfungselement sowie auf den Maschinenfuß und gleicht Bodenunebenheiten bis etwa +-10mm aus. Der standfeste Betrieb des Automaten wird durch eine lastabhängige Stoßdämpferfunktion erreicht. Das Feder-Dämpfungselement ist für den Einbau im Inneren des Maschinengehäuses, hinten rechts oder links, abhängig von der Belastung des Fußes und ausgehend von der Trommeldynamik in Verbindung mit der Aufhängung der Waschmaschinentrommel und ihrer Massenverteilung konzipiert. Die Befestigung (Verschraubung) dieses Automatikfußes erfolgt von der Geräteunterseite her.

Eine weitere Anordnung, die dem Anmelder bekannt ist, besteht aus einer mechanischen Wippe ohne federnde Steifigkeit, aber mit einer Reibdämpfung durch entsprechende Führungen. Dazu dient ein festes Gestänge, das die beiden Füße miteinander verbindet. Der Nachteil ist hier, daß durch das feste Gestänge das System abhängig wird vom Bauraum und Fußabstand.

Aus der US 3 954 241 ist ein Nivelliersystem für ein Gerät, wie Waschmaschine, bekannt, bestehend aus an der Unterseite des Gerätes angeordneten Gerätefüßen 14, 16, von denen zwei am Vorderende des Gerätes zugänglich und durch Drehen in einem Gewinde höhenverstellbar sind und dadurch eine Höheneinstellung des vorderen Endes des Gerätes und/oder eine Anpassung an Bodenunebenheiten erlauben, während zwei hintere Gerätefüße 16 durch ein Zugkabel einen automatischen Höhenausgleich erlauben, wobei die mittels des Zugkabels höhenverstellbaren Gerätefüße 16 jeweils ein an der Rückseite nahe der Unterseite oder direkt an der Unterseite des Gerätes befestigtes Zylindergehäuse aufweisen, in welchem ein den Gerätefußteller 34 tragender Kolben angeordnet ist, wobei das Zugkabel 18 die Kolben der zwei Gerätefüße 16 miteinander verbindet. Unter Betriebslast verhindert Reibung eine Bewegung des Kabels. Eine gemeinsame Höhenänderung in gleiche Richtung zur Einstellung der Gerätehöhe ist bei den hinteren Füßen nicht vorgesehen. Bei Unterbaugeräten ist das ein Nachteil.

Aus der US 4 770 275 ist ein Nivelliersystem für eine Leiter bekannt, bestehend aus an der Unterseite 10 der Leiter angeordneten Gerätefüßen 3, die mittels eines drahtseilförmigen Betätigungsgliedes 4 höhenverstellbar sind und dadurch eine reziproke Höheneinstellung der Füße der Leiter und damit eine Anpassung an Bodenunebenheiten erlauben, wobei das Betätigungsglied ein Zugglied 4 ist und die mittels des Zuggliedes 4 höhenverstellbaren Gerätefüße 3 jeweils ein an der Unterseite der Leiter befestigtes Zylindergehäuse 1 aufweisen, in welchem ein den Gerätefußteller 12 tragender Kolben 3 angeordnet ist, wobei der Kolben 3 eine Gewindebohrung zur Aufnahme eines Bolzens 10 aufweist, der an seinem kugelförmigem Ende einen um die Kugel begrenzt verschwenkbaren Gerätefußteller 12 aufweist. Auch hier ist eine Höhenänderung in gleiche Richtung nicht vorgesehen, sie wäre bei einer Leiter auch nicht sinnvoll. Auch hier wird die Bewegung des Zuggliedes durch Reibeinrichtung unter Last verhindert. Es sei ergänzt, daß die Füße einer Leiter stets gut zugänglich sind, so daß sich hier das Problem unzugänglicher Füße nicht stellt.

Anders liegt der Fall, wenn das Haushaltgerät eine Haushaltmaschine darstellt, bei der zumindest zwei der Gerätefüße, nämlich die hinteren, zumindest in Einbauküchen unzugänglich sind. Hier wäre es nützlich, auch die Möglichkeit einer Einstellung, notfalls Voreinstellung der Höhe der Füße in gleiche Richtung vornehmen zu können, zusätzlich zu der Nivellierung (in gegenläufiger Richtung) zum Ausgleich von Bodenunebenheiten.

Das System gemäß der eingangs genannten DE 35 19 479 hat zwar bereits viele grundlegende Vorteile, so wird beispielsweise bei der Anordnung erreicht, daß zwischen den beiden Gerätefüßen im hinteren Bereich der Maschine ein Selbstregulierungseffekt eintritt, jedoch ist die bekannte Anordnung in ihrem Aufbau auf Dauer nicht stabil genug. Um über einen längeren Zeitraum den Flüssigkeitsdruck aufrecht zu erhalten, sind genau zu bemaßende und toleranzarme metallische Bauteile erforderlich, die teuer in der Herstellung sind. Wird das System undicht, ist eine Wiederherstellung der Fußeinstellung nicht möglich.

### Aufgabe der Erfindung

Aufgabe der Erfindung ist es, ein Nivelliersystem für Haushaltsmaschinen der eingangs genannte Art zu schaffen, bei dem auch nach Ausfall von derartigen, die automatische Nivellierung durchführenden Einrichtungen eine Wiederherstellung der Fußeinstellungshöhe grundsätzlich noch möglich ist. Des weiteren sollte die Anordnung derart weitergebildet werden können, daß hinsichtlich Material und Verarbeitung teure Metallteile durch billige, mit der Spritzgußtechnik herstellbare und in einfacher Weise miteinander verbindbare Kunststoffteile ersetzt werden können. Außerdem soll erreicht werden, daß die bei hydraulischen Einrichtungen auftretenden besonderen Probleme, wie Dichtheitsprobleme, entfallen. Schließlich soll erreicht werden, daß bei den bisher bekannten Nivelliersystemen zu beachtende Abhängigkeiten von wechselnden Belastungen weitgehend vermieden werden, d. h., daß auch seitliche Belastungen, z. B. durch einen Wäschekorb, nicht zu einer sofortigen neuen Nivellierung der Haushaltsmaschine führen.

### Lösungswege

Die erfindungsgemäße Aufgabe wird dadurch gelöst, daß der Kolben eine Aufnahme zur höhenverstellbaren Anordnung des Schaftes eines Gerätefußtellers aufweist.

Dadurch wird es möglich, auch bei auftretenden Störungen, z. B. Reißen oder Brechen des Zuggliedes, mit Hilfe eines verstellbaren Schaftes den Fußteller so neu einzustellen, daß gleichwohl eine Nivellierung erreicht wird.

Erreicht wird dies dadurch, daß (nur) die beiden hinteren Gerätefüße jeweils ein Zylindergehäuse aufweisen, welche Zylindergehäuse über eine mechanische Ketten-, Band- oder Seilverbindung miteinander in Zugverbindung stehen, die in Richtung der Zylindergehäuseachse eine Kraftkomponente aufweist. Auf diese Art wird ohne hydraulische Einrichtungen erreicht, daß gleichwohl sich die beiden Gerätefüße gegenseitig so beeinflussen, daß eine Nivellierung eintritt.

Gemäß einer Weiterbildung der Erfindung kann das Band oder dgl. am beweglichen Kolben befestigt und um eine vom festen Zylindergehäuse gebildete oder getragene Umlenkung herumgeführt sein (Anspruch 3). Alternativ kann das Band oder dgl. im festen Zylindergehäuse befestigt und um eine vom beweglichen Kolben gebildete oder getragene Umlenkung herumgeführt sein (Anspruch 4).

Die mechanische Ketten-, Band- oder Seilverbindung, wie auch der Zylinder bzw. das Zylindergehäuse können eine Hemm- oder Dämpfungseinrichtung aufweisen, wie eine den Durchlauf von Kette, Band oder Seil oder die Verschiebung des Kolbens im Zylinder hemmende Reibeinrichtung (Anspruch 5). Einseitige Belastungen, die nur vorübergehend gelten, oder klein sind, führen daher nicht sofort zu einer Nivellierungsänderung, wohl aber lang dauernde und große Änderungen.

Die Reibeinrichtung kann von in der Kolbenumfangsfläche in Ringnuten getragenen Reibringen, wie O-Ring-Dichtungen, gebildet sein (Anspruch 5). Alternativ kann die mechanische Verbindung, wie das die Kolben verbindende Band oder dgl., durch eine Reibeinrichtung beeinflußt, wie hindurchgeführt sein (Anspruch 5).

Zu einer wirtschaftlichen Fertigung ist es vorteilhaft, wenn die aus Zylinder und Kolben bestehende Anordnung zumindest teilweise aus Kunststoff gefertigt wird (Anspruch 6). Der Kolben kann einen Querstift oder eine Rolle lagern, der/die das Band oder dgl. lagert oder umlenkt (Anspruch 7). Es ist von Vorteil, die Lagerung oder Umlenkung des Zylindergehäuses nahe der Ebene der die Gerätefüße tragenden Unterseite oder Bodenplatte anzuordnen (Anspruch 8), weil dann auch die auf die Füße einwirkenden Hebelkräfte verkleinert werden, die sonst zu einer Verbiegung des Bodenbleches führen könnten.

Das Zylindergehäuse könnte eine Befestigungsvorrichtung, wie Schelle oder Drahtbügel zur Befestigung von Seil, Band oder Kette aufweisen, falls die Befestigung nicht am Kolben erfolgt (Anspruch 9). Durch Führen des Seils oder dgl. über eine von dem Kolben gebildete Umlenkung erfolgt dann die Ausrichtung der beiden Gerätefüße zur Anpassung an Unebenheiten im Boden.

Für den Fall eines Versagens der Nivelliereinrichtung, beispielsweise bei Reißen des Bandes, des Seils oder der Kette bei unüblicher hoher Belastung ist es günstig, wenn das Gehäuse für den Kolben Anschlageinrichtungen für eine Hubwegbegrenzung des Kolbens bildet (Anspruch 10). Wegen der bezüglich des Kolbens einstellbaren Fußteller-Schaft-Anordnung ist dann immer noch eine Nivellierung von Hand möglich.

Sofern das Zylindergehäuse an seinem freien Ende offen ist, was konstruktive Vorteile hat, ist es günstig, wenn die Anschlageinrichtungen von einem durch die Zylinderwandungen hindurchreichenden Splint oder Bolzen gebildet werden, der leicht angebracht und auch wieder entfernt werden kann (Anspruch 11).

Wie schon erwähnt, ist es aus Stabilitätsgründen günstig, wenn das Zylindergehäuse an seinem unteren, der Befestigung nahen Bereich eine Öffnung zum Hindurchführen und Umlenken des Bandes oder dgl. aufweist. Dies ist eine besonders einfache Konstruktion und belastet die Füße weniger auf Biegung (Anspruch 12).

Das Zylindergehäuse weist zweckermäßigerweise einen vom Schaft des Fußtellers durchdrungenen, aus Kunststoff oder Metall bestehenden Ansatz auf (Anspruch 13). Dieser Ansatz kann mit dem Zylindergehäuse durch Verkleben, Verschweißen, Verklipsen oder Verschrauben oder einstückig verbunden sein (Anspruch 14). Der Ansatz dient, wenn er ein Umfangsgewinde aufweist, zum Aufschrauben einer Befestigungsmutter (Anspruch 15).

Das Nivelliersystem kann ein Band aufweisen, das aus Stahl besteht, oder auch aus gerecktem oder glasfaserverstärktem Kunststoff, wie es als Verpackungsband häufig angewendet wird (Anspruch 16).

Soll das Nivelliersystem nicht nur einen Ausgleich von Bodenunebenheiten ermöglichen, sondern auch ein Anheben und Absenken insgesamt, ist es günstig, wenn von der Geräteseite her zugängliche Verspanneinrichtungen vorgesehen sind (Anspruch 17). Das erlaubt es, das Band, das Seil oder die Kette soweit z. B. parallel zur Bodenfläche zu ziehen und dadurch die effektive Höheneinstellung der an den beiden Enden des Bandes hängenden Gerätefüße zu ändern.

Bei den auf dem Markt verfügbaren Waschmaschinensystemen werden bisher nur Standgeräte mit ausschließlich Ausgleichsystemen zur Anpassung an Bodenunebenheiten, oder nur Einbaugeräte (hintere Füße sind nicht zugänglich) mit ausschließlich zwei Verstellgetrieben geliefert, bei denen die zwei hinteren Füße einzeln justiert werden müssen. Die vorliegende Erfindung ermöglicht es, eine Kombination beider Systeme zu erreichen, wie die vorstehende Ausführungsform zeigt. Diese Ausführungsform läßt sich noch verfeinern, indem die Verspanneinrichtung ein auf einem Schlitten axial verschiebliches Schlittengetriebe umfaßt (Anspruch 18), das gemäß einer anderen Ausführungsform auch eine Rutschkupplung aufweisen mag (Anspruch 19). Diese Einrichtung kann nach der deutschen Patentschrift 195 28 901 aufgebaut sein, insbesondere aber gemäß der nachfolgenden näheren Beschreibung. Eine derartige Getriebeeinheit, ggf. mit Rutschkupplung, verkürzt oder verlängert die Bandlänge. Somit wird ein Anheben oder ein Absenken der Maschine erreicht. Die Getriebeeinheit muß gleichzeitig aber auch axial in Bandrichtung verschiebbar sein, um weiterhin die Möglichkeit zu haben, Bodenunebenheiten automatisch auszugleichen.

### Kurze Beschreibung der Zeichnungen

Die Erfindung wird nachfolgend anhand von Ausführungsbeispielen näher erläutert, die in den Zeichnungen dargestellt sind.

Es zeigt:
- Fig. 1: eine Diagrammdarstellung zur Erläuterung der Funktion des erfindungsgemäßen Nivelliersystems;
- Fig. 2: schematisch eine Haushaltsmaschine mit zwei erfindungsgemäß nivellierenden Füßen;
- Fig. 3: eine vergrößerte Darstellung des linken Teils der Fig. 2 zur Erläuterung einer Ausführungsform eines nivellierenden Fußes;
- Fig. 4: eine andere Darstellung des Fußes der Fig. 3 mit zugehörigem durch einen Splint gebildeten Anschlag;
- Fig. 5: ein Nivelliersystem, bei dem das Band oder dgl. am Gehäuse befestigt ist und von der Kolbenspitze, um die das Band geschlungen ist, ausgelenkt wird;
- Fig. 6: eine ähnliche Darstellung wie Fig. 5, bei der ebenfalls die Befestigung am Gehäuse erfolgt und eine Umlenkrolle auf der Spitze des Kolbens unter Bandspannung steht;
- Fig. 7: eine ähnliche Darstellung wie Fig. 5 und 6, einer Anordnung, bei der eine zusätzliche Spanneinrichtung vorgesehen ist;
- Fig. 8: in einer ähnlichen Ansicht wie Fig. 2 eine Ausführungsform, bei der die zusätzliche Spanneinrichtung von einem Getriebe gebildet wird;
- Fig. 9: eine vergrößerte Darstellung des Getriebes;
- Fig. 10: eine Ansicht des Antriebs des Getriebes, der von vorne her zugänglich ist; und
- Fig. 11: eine Darstellung ähnlich Fig. 2 zur Darstellung einer weiteren Ausführungsform.

### Detaillierte Beschreibung der Erfindung

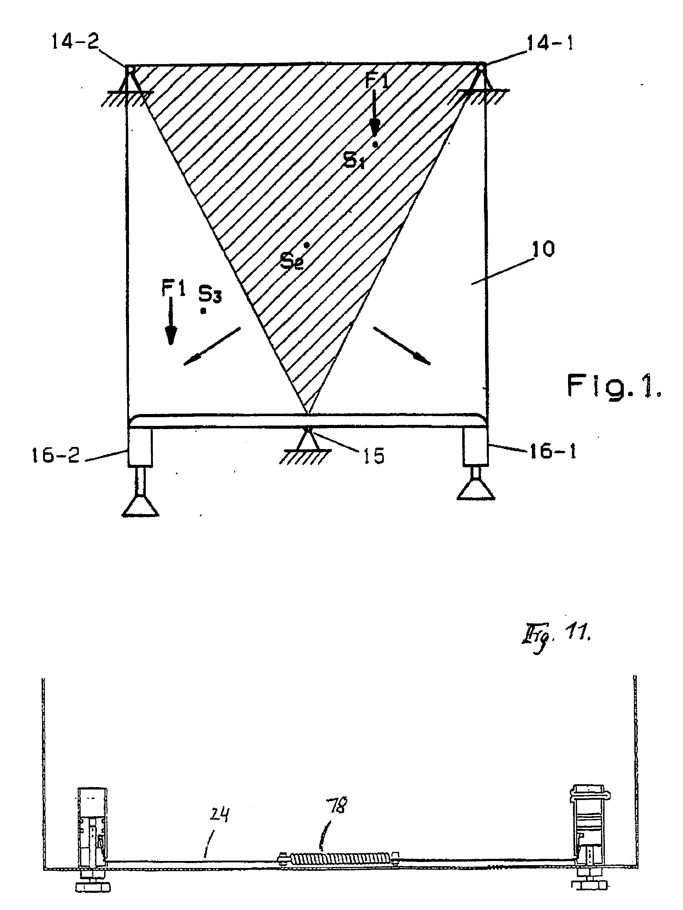

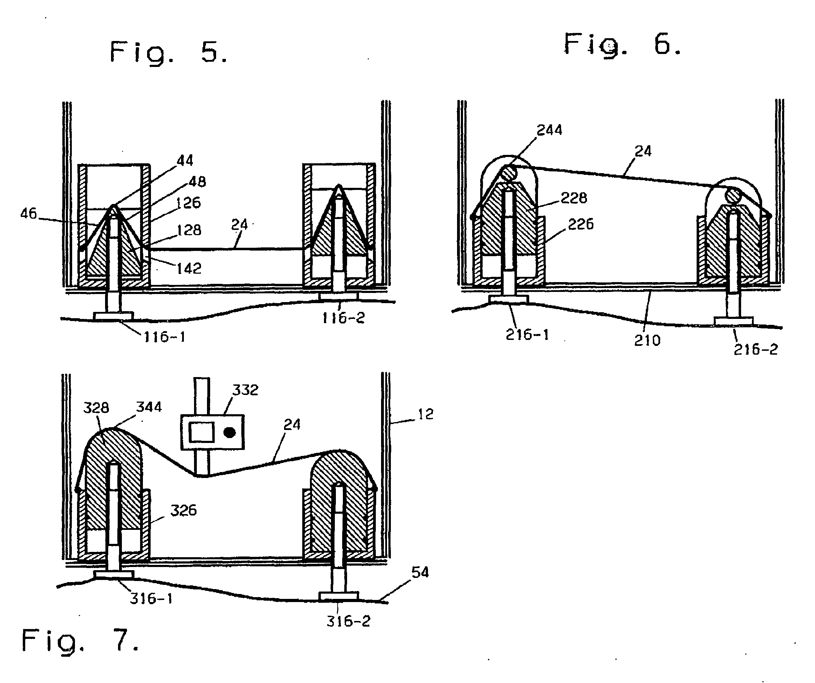

Fig. 1 zeigt eine Bodenplatte 10 einer Haushaltsmaschine 12, wie beispielsweise eine Waschmaschine, die vier an der Unterseite der Haushaltsmaschine 12 angeordnete Gerätefüße 14-1, 14-2 (vorne) und 16-1 und 16-2 (hinten) aufweist. Die Gerätefüße 14, 16 weisen in an sich bekannter Weise eine Gewindestange 18 und einen Fußteller 20 auf, wobei mittels eines vom Fußteller 20 oder von der Gewindestange 18 gebildeten prismatischen, z. B. Sechskantbereichs 22, siehe Fig. 3, mit Hilfe eines Maulschlüssels die Gewindestange soweit gedreht werden kann, daß Bodenunebenheiten ausgeglichen werden. Steht die Haushaltsmaschine 12 zwischen zwei anderen Haushaltsmaschinen oder Möbeln oder ist sie irgendwo eingebaut, kommt man an die hinteren Füße 16-1 und 16-2 schlecht heran. Dieses Problem wird erfindungsgemäß dadurch gelöst, daß die beiden hinteren Gerätefüße 16-1 und 16-2 Teil eines Seilzugsystems sind, bei dem für die gesamte Lebensdauer des Systems ein statisch bestimmter Stand des Gerätes sich ergibt. Das Nivelliersystem besteht aus zwei durch ein Seil oder Band oder eine Kette 24 miteinander verbundenen Nivellierfüßen 16-1, 16-2, die anstatt der normalen hinteren Schraubfüße eingebaut werden und diese ersetzen.

Bei Betrachtung der gesamten Kombination von vier Füßen, einschließlich der hinteren Nivellierfüße 16-1, 16-2 und der vorderen manuell regelbaren Füße 14-1, 14-2, stellt man fest, daß der Gesamtschwerpunkt S1 oder S2 innerhalb des Dreiecks 14-1, 14-2, 15 beliebig verschoben werden kann, ohne daß sich an der Gleichgewichtssituation etwas ändert, da die Last F0 stets von den beiden realen Füßen 14-1, 14-2 und dem virtuellen Fuß 15 aufgenommen wird, siehe Fig. 1. Erst wenn sich durch eine große Last außerhalb des Dreiecks, beispielsweise bei F1, der Schwerpunkt nach außerhalb des Dreiecks verschoben wird, siehe beispielsweise den Punkt S3, würde die Anordnung sich so verändern, daß der Fuß 14-1 sich vom Boden abhebt. Mittels der noch zu beschreibenden Laufhemmung mittels einer Reibeinrichtung und/oder Stoßdämpfungseinrichtung in dem System gelingt es jedoch, je nach Einstellung der Reib- oder Dämpfungseinrichtung über eine gewisse Zeit in der Lage das Dreieck bis zu einem Rechteck zu vergrößern und somit Belastungen, wie z. B. durch einen schweren Wäschekorb außerhalb des Dreiecks, F1, problemlos aufzunehmen. Wird der Korb und damit die Kraft F1 wieder weggenommen, nivelliert sich das System von selbst wieder in den ursprünglichen Zustand hinein.

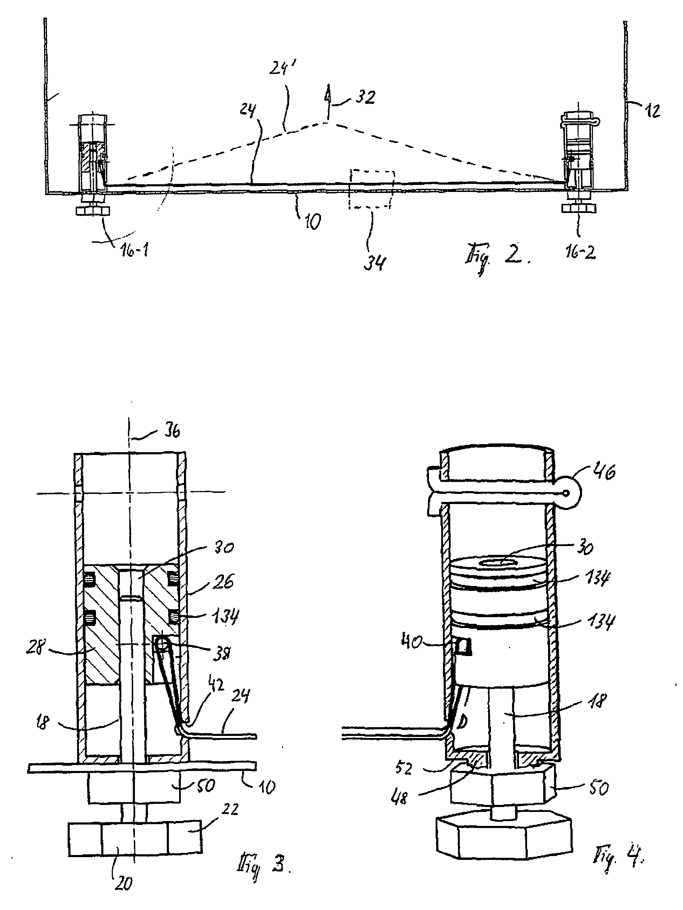

Es sei nun genauer auf das Nivelliersystem gemäß der Erfindung eingegangen. So zeigt Fig. 2, daß die Gerätefüße 16-1, 16-2 jeweils ein Zylindergehäuse 26 aufweisen, in welchem ein einen Gerätefußteller 20 tragender Kolben 28 angeordnet ist. Dieser Kolben 28 besitzt eine Aufnahme 30 zur höhenverstellbaren Anordnung des Schaftes 18 des Gerätefußtellers 20, beispielsweise höhenverstellbar dadurch, daß der Aufnahmeraum 30 ein Gewindesackloch oder Gewindedurchgangsloch darstellt, in das der mit Außengewinde versehene Schaft 18 mehr oder weniger weit eingeschraubt wird.

Wie bereits erläutert, ist es ausreichend, nur die beiden hinteren Gerätefüße 16-1, 16-2 mit einem jeweils mit einem Kolben ausgestatteten Zylindergehäuse 26 zu versehen, welche Zylindergehäuse 26 dann über eine Seil- oder Band- oder Kettenverbindung 24 miteinander in Zugverbindung stehen, wie es Fig. 2 andeutet. Selbstverständlich ist es möglich, optional eine weitere Seilspanneinrichtung 32 vorzusehen, mit der die Seilverbindung oder dgl., 24', ausgelenkt werden kann, wie es die Fig. 2 gestrichelt andeutet, um so auch bei Bedarf eine gemeinsame Einstellung der Höhe der hinteren Füße vornehmen zu können, ohne die manuelle Verstellbarkeit in Anspruch zu nehmen. Normalerweise kann aber auf diesen Aufwand verzichtet werden.

Die in Fig. 2 erkennbare Zugverbindung 24 kann beispielsweise in dem Bereich des Zylindergehäuses 16-1 und/oder 16-2, aber auch im Bereich des Bandes oder dgl. der Zugverbindung selbst, eine Dämpfungseinrichtung 34 aufweisen, bestehend z. B. aus einer den Durchlauf des Seils oder dgl. hemmenden Einrichtung. Diese Einrichtung 34 kann einfach eine Klemme sein, die das Seil reibend einklemmt, aber auch eine von Seil oder Band oder Kette umschlungene Seilscheibe, die reibend und/oder gedämpft drehend gelagert ist.

Eine entsprechende Hemm- oder Dämpfungseinrichtung kann aber auch Teil der noch zu beschreibenden Kolbeneinrichtung sein, beispielsweise in Form einer O-Ringdichtung 134 im Kolben. Die Gerätefüße können aus Kunststoff gespritzte Bauteile sein, was die Herstellungskosten erniedrigt, während das runde Seil oder das flache Band 24 z. B. aus einem vorgerecktem Kunststoff besteht, wie es beispielsweise zum Umgurten von Paketen eingesetzt wird. Dieses flache Band ist flexibel, aber dehnungsstarr und erfüllt den hier vorgesehenen Zweck besonders gut. Alternativ können aber auch entsprechende Seile oder Ketten dienen.

Die Verbindung zwischen den beiden Gerätefüßen 16-1, 16-2 ist derart, daß die mechanische Bandverbindung 24 in Richtung der Zylindergehäuseachse 36 eine Kraftkomponente aufweist. Gemäß Fig. 3, aber auch gemäß Fig. 4, ist das Band 24 oder dgl. am beweglichen Kolben 28 befestigt, z. B. mittels eines querliegenden Stiftes 38, der sich auf den Schultern eines Bandbreite 24 aufweisenden seitlichen Einschnitts in dem Kolben 28 abstützt. Die Zylinderwand des Zylinders 26 verhindert in der dargestellten Montagestellung ein Heraustreten des Stiftes 38 aus dem in dem Kolben 28 gebildeten Schlitz 40. Das Band 24 ist dann um eine vom festen Zylindergehäuse 26 gebildete Umlenkungskante 42 herumgeführt. Wenn an dem Band 24 gezogen wird, bewegt sich der Kolben 28 nach unten und schiebt den Fuß 20 weiter aus seinem Gehäuse heraus, was ein Anheben des Gerätebodens bewirkt. Gleichzeitig würde an der anderen Seite des Gerätebodens, beispielsweise an dem Gerätefuß 16-2, der Kolben nach oben wandern und der Gerätefuß entsprechend näher zum Boden des Gerätes rücken und so ein Absenken des Gerätes an diese Stelle bewirken.

Bodenunebenheiten können aber auch in anderer Weise ausgeglichen werden, wie die Fig. 5, 6 und 7 zeigen. So ist gemäß Fig. 5 das Seil oder das Band 24 jeweils am Gehäuse 126 befestigt und über eine vom Kolben 128 gebildete Umlenkspitze 44 und von da aus erst durch einen Schlitz 142 nach draußen geführt und dann von dort zu dem gegenüberliegenden Fuß 116-2 mit ähnlichem Aufbau. Der Vorteil dieser Anordnung ist, daß das Band nur mit halber Druckkraft des Fußes belastet wird, da sich die Druckkraft des Fußes auf zwei Seil- oder Bandabschnitte 47, 49 verteilt. Beide Ausführungsformen, sowohl die gemäß Fig. 2 wie auch die gemäß Fig. 5, haben den Vorteil, daß das Seil oder Band 24 nahe dem Bodenblech 10 aus dem Zylindergehäuse 26 bzw. 126 austritt und dadurch die Belastung auf Biegung für die beiden Gehäuse relativ klein bleibt. Das ist bei der Art gemäß Fig. 6 anders: Dort ist zwar auch das Band oder das Seil 24 am Gehäuse 226 in geeigneter, hier nicht näher dargestellter Weise befestigt, und wird auch über eine Umlenkanordnung 144 an der Spitze des Kolbens 228 geführt und in Richtung zu dem anderen Fuß 216-2 geführt, ohne nochmals vom Gehäuserand 226 umgelenkt zu werden. Daher ist die Belastung des Bandes 24 doppelt so hoch und die Belastung der Füße auf Biegung ist wegen des größeren Abstandes des Bandes 24 von dem Befestigungsbereich am Bodenblech 210 auch größer.

Es wurde eingangs erwähnt, daß es günstig ist, die hier dargestellte mechanische Ketten-, Band- oder Seilverbindung 24 mit einer Reib- und/oder Dämpfungseinrichtung 34, 134 zu versehen, um beispielsweise beim Schwingen im Schleudergang einer Waschmaschine ein schnelles Hin- und Hergleiten des Bandes 24 zu unterdrücken, was auch Verschleißerscheinungen an dem Band hervorrufen könnte. Zu diesem Zweck dient entweder eine Einrichtung 34, gemäß Fig. 2 in der Mitte dargestellt dazu, das Band in seiner Hin- und Herbewegung zu dämpfen, oder alternativ die Kolben, indem z. B. Reibeinrichtung als von der Kolbenumfangsfläche in drei Nuten getragene Reibringe, wie O-Ringdichtungen 134 angeordnet werden, siehe Fig. 3 und 4.

Aus herstellungstechnischen Gründen ist es sinnvoll, die Zylinder 26 und Kolben 28 jeweils aus Kunststoff zu fertigen. Der Stift 38 kann allerdings aus Metall bestehen, um ihm höhere Stabilität zu geben. Da nicht ausgeschlossen werden kann, daß die Seileinrichtung 24 aufgrund von zu starker Beanspruchung reißt, ist es sinnvoll, wenn das Gehäuse 26 für den Kolben 28 Anschlageinrichtungen 46 aufweist, die den Hubweg des Kolbens nach oben hin begrenzen. Wenn das Band reißt oder aus anderen Gründen nicht verwendet wird, kann dann gleichwohl durch Ein- und Ausschrauben dieses Bolzens 18 innerhalb des Kolbens 28 eine Nivellierung vorgenommen werden.

Aus konstruktiven Gründen wird es zweckmäßig sein, das obere Ende des Zylindergehäuses offen zu gestalten, in welchem Falle es günstig ist, wenn die Anschlageinrichtungen von einem durch Zylinderwandungen hindurchreichenden Stift oder Splint 46 gebildet werden.

Zur Montage des Gehäuses 26 an einer Bodenplatte 10 oder dgl. ist es günstig, wenn das Zylindergehäuse 26 einen vom Schaft 18 des Fußtellers 22 durchdrungenen, aus Kunststoff oder Metall bestehenden Ansatz 48 aufweist. Er kann mit dem Gehäuse 26 einstückig gespritzt sein, oder aber durch Verkleben, Verschweißen, Verklipsen oder Verschrauben mit diesem verbunden sein. Der Ansatz weist zweckmäßigerweise ein Umfangsgewinde zum Aufschrauben einer Befestigungsmutter 50 auf, die zwischen sich und dem Gehäuseboden 52 die Bodenplatte 10 einklemmt und dadurch den Fuß festlegt, siehe Fig. 3.

Durch eine in Fig. 7 erkennbare Zugeinrichtung 332 kann das Band 24 aus dem geraden Verlauf, wie er in Fig. 5 und 6 dargestellt ist, herausgedrückt werden, wodurch mehr Bandlänge benötigt wird, so daß sich die Kolben der beiden Fußeinrichtungen 316-1 und 316-2 gemeinsam nach unten bewegen, so daß sie die nivellierte Waschmaschine 12 an ihrem hinteren Ende insgesamt nach oben gehoben wird. Die Einrichtung 332 kann ein mechanisches Getriebe umfassen, das von der Gerätevorderseite aus betätigt werden könnte.

Ein derartiges Getriebe ist beispielsweise aus der DE 196 06 460 A1 oder aus der DE 195 28 901 A1 bekannt, wobei statt damit einen Fuß auf und ab zu bewegen, hier das Auslenken des Seiles 24 erfolgen könnte.

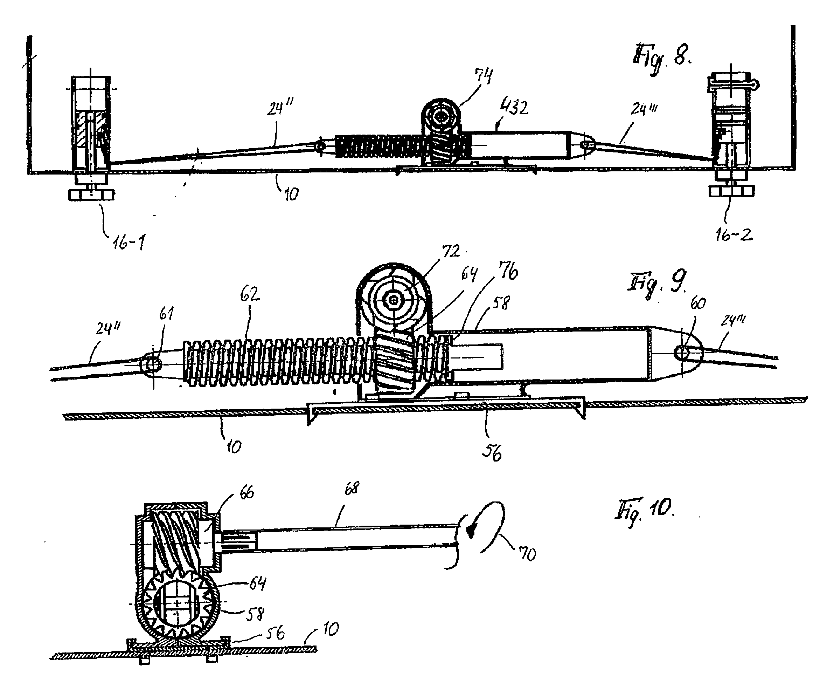

Fig. 8 zeigt in einer ähnlichen Darstellung wie Fig. 2 eine andere Verspanneinrichtung 432 mit einem mechanischen Schneckengetriebe 74, bestehend aus einer auf der Bodenplatte 10 montierten Schlitteneinrichtung 56, auf der axial verschieblich ein Getriebegehäuse 58 angeordnet ist. Das zum Fuß16-2 führende Band 24''' ist am rechten Gehäuseende an einem Stift 60 festgelegt, während das von dem anderen Fuß 16-1 kommende Band 24" am in Fig. 9 dargestellten linken Ende einer Gewindestange 62 mittels Stift 61 befestigt ist, die vorzugsweise aus Kunststoff besteht und deren Einziehen und Austreten aus dem Gehäuse 58 durch eine als Schnecke ausgestaltete Mutter 64 bestimmt wird. Die Außenschnecke der Mutter 64 wird von einem Schneckenrad 66 angetrieben, das über eine Rutschkupplung 72 mittels einer Antriebsstange 68 von der Gerätevorderseite her gedreht werden kann, siehe den Pfeil 70. Der Vorteil der Anlage ist, daß mit nur einem einzigen Bedienungsknopf beide Füße gemeinsam auf- und abbewegt werden können, wobei gleichzeitig durch die Verschieblichkeit des Getriebes auch eine durch Bodenunebenheiten notwendige Nivellierung automatisch stattfinden kann.

Wird der Antrieb 70 von der Vorderseite der Waschmaschine her betätigt, dreht sie die Antriebsstange 68 und damit das Schneckenrad 66 in dem Gehäuse 58, wodurch das Ritzel oder die Mutter 64 rechts oder links herumgedreht wird, wodurch wiederum die Getriebestange 62 nach rechts oder nach links axial verschoben wird. Eine Verschiebung nach rechts gemäß Fig. 9 würde zu einem Spannen der beiden Seile 24" und 24''' führen, was einem gleichzeitigen Anheben der Maschine an deren hinteren Ende führen würde, während umgekehrt eine Verschiebung der Gewindestange-62 nach links gemäß Fig. 9 zu einem Absenken des hinteren Endes der Maschine führt, weil dann die Füße mit dem zugehörigen Kolben nach oben wandern und dadurch sich die Maschine absenkt. Gleichzeitig wird erreicht, daß durch Verschieblichkeit des Gehäuses 58 in dem Schlittenträger 56, siehe insbesondere Fig. 10, Bodenunebenheiten ausgeglichen werden, wobei diese Nivellierungsvorgänge automatisch stattfinden. Die Rutschkupplung 72 soll eine Überlastung des Bandes oder Seiles 24 verhindern. Ein Anschlagstift 76 verhindert ein unbeabsichtigtes Herausdrehen der Gewindestange 62 aus der Mutter 64.

Es hat sich gezeigt, daß manche Waschmaschinentypen ein noch besseres Standverhalten zeigen, wenn die Federsteifigkeit des Bandes 24 oder Seils mit einer zusätzlichen Feder 78 gemäß Fig. 11 reduziert wird, die mit dem Seil in Serie angeordnet ist.

### Gewerbliche Anwendbarkeit

Die Erfindung ist in der Küchenmaschinenindustrie gewerblich anwendbar.

## Patentansprüche

1. Nivelliersystem für Haushaltsmaschinen, bestehend aus an der Unterseite (10) der Haushaltsmaschine (12) angeordneten Gerätefüßen (16-1, 16-2, 14-1, 14-2), die zumindest teilweise (16-1, 16-2) mittels eines Betätigungsgliedes (24) höhenverstellbar sind und **dadurch** eine Höheneinstellung der Haushaltsmaschine und/oder eine Anpassung an Bodenunebenheiten erlauben, wobei das Betätigungsglied ein Zugglied ist und die mittels des Zuggliedes (24) höhenverstellbaren Gerätefüße (16-1, 16-2) jeweils ein an der Unterseite (10) der Haushaltsmaschine (12) befestigtes Zylindergehäuse (26, 126, 226, 326, 426) aufweisen, in welchem ein den Gerätefußteller (20) tragender Kolben (28, 128, 228, 328) angeordnet ist, wobei das Zugglied (24) die Kolben (28, 128, 228, 328) der mittels des Zuggliedes (24) höhenverstellbare Gerätefüße (16-1, 16-2) miteinander verbindet, **dadurch gekennzeichnet, daß** der Kolben (28, 128, 228, 328) eine Aufnahme (30) zur höhenverstellbaren Anordnung des Schaftes (18) des Gerätefußtellers (20) aufweist.

2. Nivelliersystem für Haushaltsmaschinen nach Anspruch 1, **dadurch gekennzeichnet, daß** die beiden hinteren Gerätefüße (16-1, 16-2) jeweils ein Zylindergehäuse (26, 126, 226, 326) aufweisen, welche Zylindergehäuse über eine mechanische Ketten-, Band- oder Seilverbindung (24) miteinander in Zugverbindung stehen, die in Richtung der Zylindergehäuseachse (36) eine Kraftkomponente aufweist.

3. Nivelliersystem für Haushaltsmaschinen nach Anspruch 2, **dadurch gekennzeichnet, daß** das Band (24) oder dgl. am beweglichem Kolben (28) befestigt und um eine vom festen Zylindergehäuse (26) gebildete oder getragene Umlenkung (42) herumgeführt ist.

4. Nivelliersystem für Haushaltsmaschinen nach Anspruch 2, **dadurch gekennzeichnet, daß** das Band (24) oder dgl. am festen Zylindergehäuse (126, 226, 236) befestigt ist und um eine vom beweglichem Kolben (128, 228, 328) gebildete oder getragene Umlenkung (44, 244, 344) herumgeführt ist.

5. Nivelliersystem für Haushaltsmaschinen nach einem der Ansprüche 2 bis 4, wobei die mechanische Ketten-, Band- oder Seilverbindung (24) und/oder der Zylinder (28) bzw. das Zylindergehäuse (26) eine Hemm- oder Dämpfungseinrichtung (34, 134) aufweist, wie eine den Durchlauf von Kette, Band oder Seil oder die Verschiebung des Kolbens (28) im Zylinder (26) hemmende Reibeinrichtung (34, 134), **dadurch gekennzeichnet, daß** die Reibeinrichtung (134) von in der Kolbenumfangsfläche in Ringnuten getragenen Reibringen, wie O-Ring-Dichtungen, gebildet wird, oder, daß alternativ, die mechanische Verbindung (24) durch eine Reibeinrichtung (34) beeinflußt ist.

6. Nivelliersystem für Haushaltsmaschinen nach einem der Ansprüche 1 bis 5, wobei die aus Zylinder (26, 126, 226, 326) und Kolben (28, 128, 228, 328) bestehende Anordnung zumindest teilweise aus Kunststoff gefertigt ist.

7. Nivelliersystem für Haushaltsmaschinen nach einem der Ansprüche 2 bis 6, **dadurch gekennzeichnet, daß** der Kolben (28, 128, 228, 328) einen Querstift (38) oder eine Rolle (z. B. 244) lagert, der/die das Band (24) oder dgl. hält oder umlenkt.

8. Nivelliersystem für Haushaltsmaschinen nach Anspruch 7, wobei die Lagerung oder Umlenkung nahe der Ebene des die Gerätefüße tragende Unterseite oder Bodenplatte (10) angeordnet ist.

9. Nivelliersystem für Haushaltsmaschinen nach einem der Ansprüche 2 bis 8, **dadurch gekennzeichnet, daß** das Zylindergehäuse (126, 226, 326) eine Befestigungsvorrichtung, wie Schelle oder Drahtbügel zur Befestigung von Seil, Band oder Kette (24) aufweist.

10. Nivelliersystem nach einem der Ansprüche 1 bis 9, wobei das Gehäuse (26) für den Kolben (28) Anschlageinrichtungen (46) für eine Hubwegbegrenzung des Kolbens (28) bildet.

11. Nivelliersystem nach Anspruch 10, **dadurch gekennzeichnet, daß** das Zylindergehäuse (26) an seinem freien Ende offen ist und daß die Anschlageinrichtungen von einem durch die Zylinderwandungen hindurchreichenden Splint oder Bolzen (46) gebildet werden.

12. Nivelliersystem nach einem der Ansprüche 2 bis 11, wobei das Zylindergehäuse (26, 126) an seinem unteren, der Befestigung nahen Bereich eine Öffnung (42, 142) zum Hindurchführen und Umlenken eines Bandes oder dgl. (24) aufweist.

13. Nivelliersystem nach einem der Ansprüche 1 bis 12, **dadurch gekennzeichnet, daß** das Zylindergehäuse (26) einen vom Schaft (18) des Fußtellers (20) durchdrungenen, aus Kunststoff oder Metall bestehenden Ansatz (48) aufweist.

14. Nivelliersystem nach Anspruch 13, **dadurch gekennzeichnet, daß** der Ansatz (48) mit dem Zylindergehäuse (26) durch Verkleben, Verschweißen, Verklipsen oder Verschrauben verbunden ist oder einstückig ist.

15. Nivelliersystem nach Anspruch 13 oder 14, **dadurch gekennzeichnet, daß** der Ansatz (48) ein Umfangsgewinde zum Aufschrauben einer Befestigungsmutter (50) aufweist.

16. Nivelliersystem nach einem der Ansprüche 2 bis 15, **dadurch gekennzeichnet, daß** als Band (24) Stahlband, gerecktes oder glasfaserverstärktes Kunststoffband bzw. Verpackungsband ist.

17. Nivelliersystem nach einem der Ansprüche 2 bis 16, **dadurch gekennzeichnet, daß** von der Gerätevorderseite zugängliche Verspanneinrichtungen (32, 332) für das Band oder dgl. vorgesehen sind.

18. Nivelliersystem nach Anspruch 17, **dadurch gekennzeichnet, daß** die Verspanneinrichtung (432) ein auf einem Schlitten (56) axial verschiebliches Schneckengetriebe (74) umfaßt.

19. Nivelliersystem nach Anspruch 18, **dadurch gekennzeichnet, daß** das Schneckengetriebe (74) eine Rutschkupplung (72) aufweist.

20. Nivelliersystem nach einem der Ansprüche 2 bis 19, **dadurch gekennzeichnet, daß** in dem Verlauf des Seils oder Bandes (24) eine Feder (78) zwischengeschaltet ist, die so ausgelegt ist, daß die Federsteifigkeit des Seils oder Bandes (24) reduziert wird.

## Claims

1. A levelling system for domestic machines consisting of appliance feet (16-1, 16-2, 14-1, 14-2) arranged on the underside (10) of the domestic machine (12), which appliance feet are at least partially (16-1, 16-2) height-adjustable using an actuating member (24) and thereby permit height adjustment of the domestic machine and/or adaptation to floor unevenness, whereby the actuating member is a traction member and the appliance feet (16-1, 16-2) which are height-adjustable using the traction member (24) each have a cylinder housing (26, 126, 226, 326, 426) which is secured to the underside (10) of the domestic machine (12), in which cylinder housing a piston (28, 128, 228, 328) bearing the appliance foot plate (20) is arranged, whereby the traction member (24) connects the pistons (28,128, 228, 328) of the appliance feet (16-1, 16-2), which are height-adjustable using the traction member (24), to each other, **characterised in that** the piston (28, 128, 228, 328) has a receiver (30) for the height-adjustable arrangement of the shaft (18) of the appliance foot plate (20).

2. The levelling system for domestic machines according to Claim 1, **characterised in that** the two rear appliance feet (16-1, 16-2) each have a cylinder housing (26, 126, 226, 326), which cylinder housings are connected to each other in a traction connection by means of a mechanical chain, band or cable connection (24), which has a power component in the direction of the cylinder housing axis (36).

3. The levelling system for domestic machines according to Claim 2, **characterised in that** the band (24) or the like is secured at the movable piston (28) and is directed around a deflection (42) which is formed or borne by the secured cylinder housing (26).

4. The levelling system for domestic machines according to Claim 2, **characterised in that** the band (24) or the like is secured at the secured cylinder housing (126, 226, 236) and is directed around a deflection (44, 244, 344) which is formed or borne by the movable piston (128, 228, 328).

5. The levelling system for domestic machines according to one of Claims 2 to 4, whereby the mechanical chain, band or cable connection (24) and/or the cylinder (28) or the cylinder housing (26) has a blocking or damping mechanism (34, 134), such as a friction mechanism (34, 134) blocking the passage of the chain, band or cable or the displacement of the piston (28) in the cylinder (26), **characterised in that** the friction mechanism (134) is formed by friction rings such O-ring seals, borne In the piston peripheral surface in ring grooves, or alternatively **in that** the mechanical connection (24) is influenced by a friction mechanism (34).

6. The levelling system for domestic machines according to one of Claims 1 to 5, whereby the arrangement consisting of cylinders (26, 126, 226, 326) and pistons (28, 128, 228, 328) is at least partially manufactured from plastic.

7. The levelling system for domestic machines according to one of Claims 2 to 6, **characterised in that** the piston (28, 128, 228, 328) supports a transverse pin (38) or a roller (e.g. 244), which holds or deflects the band (24) or the like.

8. The levelling system for domestic machines according to Claim 7, whereby the support or deflection is arranged in the proximity of the plane of the underside or base plate (10) bearing the appliance feet.

9. The levelling system for domestic machines according to one of Claims 2 to 8, **characterised in that** the cylinder housing (126, 226, 326) has a securing device, such as a clamp or wire holder for securing the cable, band or chain (24).

10. The levelling system according to one of Claims 1 to 9, whereby the housing (26) for the piston (28) forms stopper mechanisms (46) for limiting a stroke path of the piston (28).

11. The levelling system according to Claim 10, **characterised in that** the cylinder housing (26) is open at its free end and **in that** the stopper mechanisms are formed by a split-pin or bolt (46) which penetrates through the cylinder walls.

12. The levelling system according to one of Claims 2 to 11, whereby the cylinder housing (26,126), at its lower area in the proximity of the securing, has an opening (42, 142) for directing through and deflecting a band or the like (24).

13. The levelling system according to one of Claims 1 to 12, **characterised in that** the cylinder housing (26) has a projection (48), consisting of plastic or metal, which the shaft (18) of the foot plate (20) passes through.

14. The levelling system according to Claim 13, **characterised in that** the projection (48) is connected to the cylinder housing (26) by gluing, welding, clipping or screwing, or is integral with it.

15. The levelling system according to Claim 13 or 14, **characterised in that** the projection (48) has a peripheral thread for screwing on a securing nut (50).

16. The levelling system according to one of Claims 2 to 15, **characterised in that** steel band, oriented or glass fibre-reinforced plastic band or wrapping band is used as the band (24).

17. The levelling system according to one of Claims 2 to 16, **characterised in that** tensioning mechanisms (32, 332) for the band or the like, which are accessible from the appliance front side, are provided.

18. The levelling system according to Claim 17, **characterised in that** the tensioning mechanism (432) includes a worm gear (74) which is axially displaceable on a slide (56).

19. The levelling system according to Claim 18, **characterised in that** the worm gear (74) has a sliding clutch (72).

20. The levelling system according to one of Claims 2 to 19, **characterised in that**, in the course of the cable or band (24), a spring (78) is interposed, which is designed such that the spring stiffness of the cable or band (24) is reduced.

## Revendications

1. Système de mise à niveau pour appareils électroménagers, constitué par des pieds (16-1, 16-2, 14-1, 14-2) agencés sur la face inférieure (10) de l'appareil électroménager (12) et réglables en hauteur au moins en partie (16-1, 16-2) au moyen d'un organe d'actionnement (24) et permettant ainsi un réglage en hauteur de l'appareil électroménager et/ou une adaptation à des irrégularités du sol, dans lequel l'organe d'actionnement est un organe de traction et les pieds (16-1, 16-2) réglables en hauteur au moyen de l'organe de traction (24) comprennent chacun un boîtier cylindrique (26, 126, 226, 326, 426) fixé sur la face inférieure (10) de l'appareil électroménager (12), boîtier dans lequel est agencé un piston (28, 128, 228, 328) portant la coupelle de pied (20), l'organe de traction (24) reliant mutuellement les pistons (28, 128, 228, 328) des pieds (16-1, 16-2) réglables en hauteur au moyen de l'organe de traction (24), **caractérisé en ce que** le piston (28, 128, 228, 328) comprend un logement (30) pour l'agencement réglable en hauteur de la tige (18) de la coupelle de pied (20).

2. Système de mise à niveau pour appareils électroménagers selon la revendication 1, **caractérisé en ce que** les deux pieds arrière (16-1, 16-2) comprennent chacun un boîtier cylindrique (26, 126, 226, 326), lesdits boîtiers cylindriques étant en liaison de traction l'un à l'autre via une liaison mécanique à chaîne, à bande ou à câble (24) qui présente une composante de force en direction de l'axe (36) du boîtier cylindrique.

3. Système de mise à niveau pour appareils électroménagers selon la revendication 2, **caractérisé en ce que** la bande (24) ou similaire est fixée sur le piston mobile (28) et est guidée autour d'un renvoi (42) formé ou porté par le boîtier cylindrique fixe (26).

4. Système de mise à niveau pour appareils électroménagers selon la revendication 2, **caractérisé en ce que** la bande (24) ou similaire est fixée sur le boîtier cylindrique fixe (126, 226, 326) et est guidée autour d'un renvoi (44, 244, 344) formé ou porté par le piston mobile (128, 228, 328).

5. Système de mise à niveau pour appareils électroménagers selon l'une des revendications 2 à 4, dans lequel la liaison mécanique à chaîne, à bande ou à câble (24) et/ou le cylindre (28) ou le boîtier cylindrique (26) comprend un dispositif d'inhibition ou d'amortissement (34, 134), tel qu'un dispositif de friction (34, 134) inhibant le passage de la chaîne, de la bande ou du câble ou bien inhibant la translation du piston (28) dans le cylindre (26), **caractérisé en ce que** le dispositif de friction (134) est formé par des anneaux de friction, tels que des joints toriques, portés dans des gorges annulaires dans la surface périphérique du piston, ou **en ce qu'**en variante la liaison mécanique (24) est influencée par un dispositif de friction (34).

6. Système de mise à niveau pour appareils électroménagers selon l'une des revendications 1 à 5, **caractérisé en ce que** l'agencement constitué par des cylindres (26, 126, 226, 326) et par des pistons (28, 128, 228, 328) est fabriqué au moins partiellement en matière plastique.

7. Système de mise à niveau pour appareils électroménagers selon l'une des revendications 2 à 6, **caractérisé en ce que** le piston (28, 128, 228, 328) loge une barrette transversale (38) ou un galet (par exemple 244) qui maintient ou renvoie la bande (24) ou similaire.

8. Système de mise à niveau pour appareils électroménagers selon la revendication 7, dans lequel le montage ou le renvoi est prévu à proximité du plan de la face inférieure ou de la plaque de fond (10) portant les pieds.

9. Système de mise à niveau pour appareils électroménagers selon l'une des revendications 2 à 8, **caractérisé en ce que** le boîtier cylindrique (126, 226, 326) comprend un dispositif de fixation tel qu'un collier ou un étrier en fil métallique pour fixer le câble, la bande ou la chaîne (24).

10. Système de mise à niveau selon l'une des revendications 1 à 9, dans lequel le boîtier (26) forme pour le piston (28) des moyens de butée (46) en vue d'une limitation de la course du piston (28).

11. Système de mise à niveau selon la revendication 10, **caractérisé en ce que** le boîtier cylindrique (26) est ouvert à son extrémité libre et **en ce que** les moyens de butée sont formés par une goupille ou un boulon (46) traversant les parois de cylindre.

12. Système de mise à niveau pour appareils électroménagers selon l'une des revendications 2 à 11, dans lequel le boîtier cylindrique (26, 126) présente dans sa zone inférieure proche de la fixation une ouverture (42, 142) destinée à faire passer et à renvoyer une bande ou similaire (24).

13. Système de mise à niveau selon l'une des revendications 1 à 12, **caractérisé en ce que** le boîtier cylindrique (26) comprend un talon (48) traversé par la tige (18) de la coupelle de pied (20) et constitué en matière plastique ou en métal.

14. Système de mise à niveau selon la revendication 13, **caractérisé en ce que** le talon (48) est relié au boîtier cylindrique (26) par collage, soudage, clipsage ou vissage ou bien il est réalisé d'un seul tenant avec celui-ci.

15. Système de mise à niveau selon la revendication 13 ou 14, **caractérisé en ce que** le talon (48) présente un pas de vis périphérique pour visser un écrou de fixation (50).

16. Système de mise à niveau selon l'une des revendications 2 à 15, **caractérisé en ce que** la bande (24) est une bande d'acier, une bande en matière plastique étirée ou renforcée de fibres de verre ou une bande d'emballage.

17. Système de mise à niveau selon l'une des revendications 2 à 16, **caractérisé en ce qu'**il est prévu des moyens de serrage (32, 332) pour la bande ou similaire, qui sont accessibles depuis le côté avant de l'appareil.

18. Système de mise à niveau selon la revendication 17, **caractérisé en ce que** le moyen de serrage (432) comprend un mécanisme de transmission à vis sans fin (74) mobile axialement en translation sur un chariot (56).

19. Système de mise à niveau selon la revendication 18, **caractérisé en ce que** le mécanisme de transmission à vis sans fin (74) comprend un accouplement à glissement (72).

20. Système de mise à niveau selon l'une des revendications 2 à 19, **caractérisé en ce qu'**un ressort (78) est interposé dans le tracé du câble ou de la bande (24), qui est conçu de manière à réduire la raideur élastique du câble ou de la bande (24).
